(19)

Europäisches
Patentamt
European
Patent Office
Office européen
des brevets

(11) **EP 3 904 147 A1**

(12) **EUROPEAN PATENT APPLICATION**

(43) Date of publication:
**03.11.2021 Bulletin 2021/44**

(51) Int Cl.:
***B60L 53/10*** *(2019.01)*

(21) Application number: **21170049.7**

(22) Date of filing: **23.04.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.04.2020 CN 202010333319**

(71) Applicant: **Ger, Chih-chan**
**New Taipei City (TW)**

(72) Inventor: **Ger, Chih-chan**
**New Taipei City (TW)**

(74) Representative: **Cabinet Chaillot**
**16/20, avenue de l'Agent Sarre**
**B.P. 74**
**92703 Colombes Cedex (FR)**

(54) **AC CHARGING SYSTEM FOR ELECTRIC VEHICLES**

(57) An AC charging system for electric vehicles, which cooperates with a power grid, includes a power detecting module, a local power supplying module, and a local charging control module. The power detecting module is coupled with a second area power converting device of the power grid to generate power parameters. The local power supplying module is coupled to the power output side of the second area power converting device of the power grid for outputting a controllable power source to the electric vehicle. The local charging control module is coupled to the power detecting module and the local power supplying module, and controls each controllable power source provided by the local power supplying module according to power parameters. Accordingly, when a large number of electric vehicles use AC charging at the same time, it can avoid the power supply of the grid being affected by the overload of electricity.

**Description**

**BACKGROUND OF THE INVENTION**

**Field of the Invention**

The invention relates to a charging system, in particular to an AC charging system for electric vehicles (EVs).

**Descriptions of the Related Art**

Electric energy is currently the densest, most widely distributed and most used energy type in the world due to its convenient use. Since EVs do not exhaust emissions when they are operating, and their energy efficiency is better than gasoline and diesel vehicles, it can reduce the consumption of fossil fuels, and the sound and waste heat generated by the electric motor are very small, which can effectively reduce noise and the heat island effect in city. Therefore, the topic of the EVs has been widely discussed in recent years.

The electric vehicle (EV) is driven by a motor, and the electrical energy required to drive the motor is generally provided by a rechargeable battery. The battery needs be charged or replaced when the power is exhausted. Under the current charging architecture, the battery of the EV is charged by DC rapid charging or slower AC charging through the grid.

Currently, the EV uses the charging pile for AC charging. The charging pile is connected between the power grid and the EV. The user can set the charging operation through the charging pile, and charge the EV after the setting is completed, and then stop charging until the charging requirements set by the user are completed. It should be noted that the charging pile will not actively stop charging before completing the charging requirements. The current charging architecture faces at least the following two problems: First, the current unit price and construction cost of the charging pile are so high that it cannot be widely installed; Second, when the EV becomes more and more popular, the number of the EV that is charged at the same time will increase rapidly. In this way, for the power grid, the EVs are really a huge power load. In the case of insufficient power supply, the power grid is not only support residential electricity and industrial electricity, but also support a huge amount of the EV charging electricity, which may cause the power grid to collapse.

To further explain, in Taiwan, the charging pile currently used by the EV, taking the 3KW AC power charging pile as an example, its unit price is about US$800 to US$1,200, which is a high unit price product, it is therefore a lot of difficulty in setting up the charging pile has been increased.

Moreover, because electricity is not easy to store, the type of power generation is immediate production and sales. Therefore, the peak and off-peak power output of the power grid is synchronized with the daily routine of human beings and presents a cycle of days, weeks, and years. Among them, a 30% difference between peak power consumption and off-peak power consumption is a common phenomenon, and a difference of 150% may occur even during peak power consumption. In general, the design, planning and construction of the power grid and its power generation are constructed based on peak load plus appropriate margin. Therefore, when the electric capacity of the EV, which has a large demand for electricity, is not regulated, the power grid may collapse during the electricity spike.

However, the construction of electric power is the result of long-term continuous planning, which involves land, environmental protection assessment, high construction costs, and lengthy construction time. If it is necessary to change the power generation structure for the large increase in the EV's electricity consumption, it is indeed a hasty approach. In order to avoid the power grid from jeopardizing the power supply status due to the simultaneous use of a large number of electric vehicles charging, it is indeed an important issue at present. Therefore, it is critical to provides an AC charging system and charging management method for electric vehicles to cooperate with power grid.

**SUMMARY OF THE INVENTION**

When the EV is used for high-speed long-distance travel, its power supply must adopt DC rapid charging or battery pack swapping. The present invention takes AC charging for daily use such as commuting and shopping as the main consideration. The present invention changes the AC charging pile, which is currently operated independently and separately. The invention of AC charging system which is composed of multiple charging socket set and a control unit. The key idea is to expect that each parking space has a charging station. There is a chance to recharge when EV is parking, the EV can drive out of the parking space with a fully charged battery. The AC charging system integrates the power grid information and uses pre-set operating methods, while achieving the three goals which are ease of use, solving the power grid problem, and solving the shortage of the charging stand.

In China in 2018, the ratio of vehicles to the charging pile is 3.8 to 1, and only a few parking spaces in the parking lot have the charging pile. The steps for the EV to enter the parking lot to charge the battery are as follows:

First, the user drives the vehicle to find a parking space with the charging pile, and confirms whether the charging pile is functioning properly and can perform payment actions; Second, removing the charging plug from the charging pile, and connecting the charging plug to the EV by the user; Third, the user confirms the charging power and battery capacity, and performs the payment action; Fourth, starting to charge the EV battery and stops until it is fully charged.

Compared with typical electronic products, because the battery capacity used by the EV is larger, the power requirement for charging is relatively large and requires a longer time. At present, the charging technology of the EV is divided into two types, that is DC rapid charging and AC charging. Among them, DC rapid charging uses direct current (DC) and is mostly realized by the DC rapid charging station; while AC charging uses alternating current (AC) is mostly realized in the way of the individual charging pile. Take the battery capacity of 30KWH as an example, at present, it takes about 30 to 50 minutes to charge the battery to 80% when using DC charging; while it takes about 5 to 10 hours to fully charge the battery when using AC charging.

In general, the stationary time of a vehicle is much longer than the driving time. Therefore, using the stationary time of the vehicle to perform AC charging to the EV will ensure that the EV has sufficient battery capacity when it moves, it could reduce Range Anxiety of the driver. However, to achieve the purpose of charging everywhere, a large number of charging piles have become a necessary means.

The EV is planned based on an average of 2 hours and a driving distance of about 80 kilometers per day, which can meet the needs of most passenger vehicles (non-business vehicles). Under the aforementioned premise, taking the EV with a power consumption of 5Km/KWh as an example, it needs 16KWh of electricity for 80 kilometers. In this way, it only takes 24% of the 22 hours of average daily stationary time of the vehicle to fully charge the EV that has run out of power.

The EV must be equipped with a car using AC to DC power converter to be able to use AC charging. Take the car using AC to DC power converter with 3KW as an example, which weighs about 7 kg. If the user wants to increase the AC charging capacity for rapid charging, the capacity of the car onboard AC to DC power converter must be increased, it leads to an increase in price, weight, and volume. The EV only needs to be in the parking space 24% of the time to be fully charged. A large number of the AC charging pile with 3KW is sufficient to meet most of the daily needs. In other words, the car industry does not need to pursue the car using AC to DC power converter for higher charging power.

To achieve the above, the present application provides an AC charging system for EVs, which is cooperated to a power grid. The power grid has a first area power converting device and a second area power converting device, which are coupled to each other. The power of the first area power converting device is greater than the power of the second area power converting device. The AC charging system includes a power detecting module, a plurality of local power supplying modules and a local charging control module. The power detecting module is coupled to the second area power converting device to generate a power parameter. Each of the local power supplying module is coupled to a power output side of the second area power converting device through a local power wiring. The local power supplying module includes a power output unit, a switching unit and a current detecting unit. The power output unit outputs a controllable power source to the EV. The switching unit is coupled between the power output unit and the local power wiring. The current detecting unit detects the current of the power output unit. The local charging control module is coupled to the power detecting module and the local power supplying modules to control the controllable power source provided by the local power supplying module according to the power of the second area power converting device.

In one embodiment, multiple EVs are respectively connected to the power output unit of the corresponding local power supplying module through a power cable, and each of the power output units is controlled by the local charging control module to perform charging operation on each EV output with a controllable power source.

In one embodiment, the power detecting module is coupled with a power input side of the second area power converting device to generate the power parameter. The power parameter is the power of the second area power converting device.

In one embodiment, a power grid control center controls the charging total charging power of the local charging control module through a zonal charging control module to regulate the power of the second area power converting device.

In one embodiment, the local power supplying module further includes a connection detecting unit. The connection detecting unit generate a connection signal after the exterior power connector connected to the local power supplying module. The local charging control module orders the switching unit to connect the power output unit to the power grid after receiving the connection signal to avoid electric shock. The connection detecting unit may be a mechanical switch, a magnetic switch, or an electronic contact. The electronic contact can be a dedicated charging cable with an additional signal connector. The additional signal connector acts as an electronic contact to form an electrical circuit to generate the connection signal when connecting the charging cable.

In one embodiment, the local power supplying module communicates to the local charging control module through wired communication or wireless communication. The wired communication may be, for example, by means of Power Line Communication (PLC) technology, and the wireless communication may be, for example, by means of Wi-Fi or ZigBee, etc.

In one embodiment, the charging system further includes a zonal charging control module, which is coupled with the local charging control module. The zonal charging control module transmits the remote-control information to the local charging control module. The local charging control module controls the controllable power source provided by the local power supplying module in accordance with the power parameter, the local control information, the vehicle state information, and the remote-control information.

In one embodiment, the first area power converting device may be a substation, a distribution substation or a transformer. The second area power converting device may be a transformer.

In one embodiment, the power output unit may be an AC power source output socket (AC outlet). An example of the AC power source outlet is compatible with 220V-240V outlets in local countries and regions.

In one embodiment, the power cable connected between the power output unit and the EV may be a telescopic reel power cable self-provided by the EV.

In one embodiment, the local charging control module controls each of the local power supplying modules to perform the charging operation on these EVs in state-by-state, where the alternate charging method is that when each EV is electrically connected to the corresponding the power output unit, the state arrangement of the power output units is a combination of "waiting for charging" and "charging".

In one embodiment, the method of controlling the output of the controllable power source of each the power output unit includes: the local charging control module designates the transmission of a stage charging current information to one of the EVs; the designated EV controls a car onboard AC to DC power converter to charge the EV according to the stage charging current information; the local charging control module obtaining the charging current reading of the designated EV from the current detecting unit of the designated local power supplying module; and determining whether the error between the charging current and the stage charging current information of the designed EV is within the allowable range, if the error exceeds the allowable range, the local charging control module controls the switching unit to stop the charging operation of the designed EV.

In one embodiment, before performing with the charging operation, the AC charging system further includes confirming that these EVs are consistent and effective with a vehicle state information of the local charging control module.

In one embodiment, the local charging control module can communicate with users or vehicles through wired or wireless communication. In addition, the local charging control module can also interact with the user through the human-machine interface (control console) to complete functions such as activation, disconnection, and fee-charging.

In one embodiment, when the power of any local power wiring increases to a wiring-capacity-rising control value, the local charging control module actively reduces the total charging power of the local power supplying modules connected to the wiring. Among them, when the power of any local power wiring decreases to a wiring-capacity-falling control value and there has a charging requirement, the local charging control module actively increases the total charging power of the local power supplying modules connected to the wiring.

In one embodiment, the wiring-capacity-rising control value is less than or equal to the upper limit of the wiring capacity, or the wiring-capacity-falling control value is less than or equal to the wiring-capacity-rising control value.

In addition, to achieve the above, the present application provides an operating method of the AC charging system for EVs, which is cooperated with the AC charging system described above. The operating method including the steps of detecting a power parameter of a power input side of the second area power converting device; establishing a service channel between the local charging control module and the EV through a start-up signal; setting a charging schedule to perform the EV charging work according to an external parameter; performing a toll operation when the local charging control module received a switch-out signal. The remote-control information of the external parameter is provided by the power grid control center and a charging system control center through the zonal charging control module.

In one embodiment, the local charging control module actively decreases the total charging power of the local power supplying module when the power parameter increased and reached the power-rising control value. The local charging control module actively increases the total charging power of the local power supplying module when the power parameter decreased and reached the power-falling control value and have charging demand. The power-rising control value and the power-falling control value are determined by the capacity of the second area power converting device or the terminal stage power supply capacity information of the remote-control information. The power-rising control value and the power-falling control value may be the same value. By increasing or decreasing the total charging power, the safety of the second area power converting device can be ensured or the power grid can be prevented from collapsing.

In one embodiment, the methods to reduce the total power of charging load include but are not limited to: 1. reducing the quantity of connected local power supplying modules to achieve the purpose of reducing the total power of charging load; 2. reducing the charging power of each local power supplying module to achieve the purpose of reducing the total power of charging load; 3. combining the above two methods to achieve the purpose of reducing the total power of charging load.

In one embodiment, the methods to increase the total power of charging load include but are not limited to: 1. adding the quantity of connected local power supplying modules to achieve the purpose of increasing the total power of charging load; 2. increasing each charging power of the local power supplying module to achieve the purpose of increasing the total power of charging load; 3. combining the above two methods to achieve the purpose of increasing the total power of charging load.

To achieve the above purpose, the present application also provides an AC charging system for EVs, which is used in conjunction with a power grid and a home. The power grid has a first area power converting device and a second area power converting device coupled to each other. The power of the first area power converting device is greater than the power of the second area power converting device. The AC charging system for EVs includes a power detecting module, at least one local power supplying module, a local charging control module and a home electricity-billing device. The power detecting module is coupled with the second area power converting device to generate a power parameter. The local power supplying module is coupled to a power output side of the second area power converting device through a local power wiring. The local power supplying module also includes a power output unit, a switching unit, and a current detecting unit. The power output unit outputs a controllable power source to charge the EV. The switching unit is respectively coupled between the corresponding power output unit and the local power wiring. The current detecting unit detects a current information of the power output unit. The local charging control module is coupled with the power detecting module. The local charging control module controls the output of each controllable power source provided by the local power supplying module according to the power of the second area power converting device. The local charging control module also calculates a total electric quantity of home-charging based on the current information detected by the current detecting unit. The home electricity-billing device is set between the local power supplying module of the home and the second area power converting device to detect a total electric quantity of home-load. Among them, the cost calculation of the total electric quantity of home-load of the home electricity-billing device is divided into two parts to calculate the cost separately. One is the total electric quantity of home-charging, and the other is a total electric quantity of home-non-charging. The calculation formula of the total electric quantity of home-non-charging is: total electric quantity of home-non-charging=total electric quantity of home-load-total electric quantity of home-charging.

In one embodiment, the local charging control module stores a home-vehicle identifying information, and the charging operation is started after judging that the EV connected to the power output unit meets the home-vehicle identifying information.

In one embodiment, the power wiring between the second area power converting device and the home electricity-billing device uses the original existing power wiring.

In addition, to achieve the above purpose, the present invention provides an operating method of the AC charging system for EVs, which is cooperated with an AC charging system for EVs and a power grid. The operating method includes detecting the power of a second area power converting device; the AC charging system for EVs actively reduces the charging power of each EV so that the total output power is less than the capacity of the second area power converting device or making the total output power is less than a pre-determined power to ensure the stability of the power grid.

In one embodiment, the total supplying power of the second area power converting device includes the total non-charging power of the subscriber load and the total charging power of the AC charging system for EVs.

In one embodiment, the output power of the local power supplying module is adjusted within a range of zero and a pre-determined power.

As mentioned above, the AC charging system for EVs of the present invention uses the power detecting module to detect the power parameter of the area power converting device to obtain the loading state. AC charging system use the power parameter to control the output power of the controllable power source from the local power supplying module. When the power parameter is increased to reach the pre-determined value, the local charging control module will actively reduce the total charging power of the local power supplying module; when the power parameter is decreased to reach the pre-determined value and there is the charging requirement. The local charging control module will actively increase the total charging power of the local power supplying module. The present invention can achieve the purpose of protecting the area power converting device and increasing the efficiency of the power grid according to the foregoing operation mode. In addition, using one local charging control module to control the charging outlet of multiple the EVs to achieve the goal of protecting the transmission and distribution network, providing the charging outlet with a low unit price, and making full use of the off-peak power.

The detailed technology and preferred embodiments implemented for the subject invention are described in the following paragraphs accompanying the appended drawings for people skilled in this field to well appreciate the features of the claimed invention.

## BRIEF DESCRIPTION OF THE DRAWINGS

The parts in the drawings are not necessarily drawn to scale, the emphasis instead being placed upon clearly illustrating the principles of at least one embodiment. In the drawings, like reference numerals designate corresponding parts throughout the various diagrams, and all the diagrams are schematic.

FIG. 1A is a schematic diagram showing an AC charging system for EVs and a power grid architecture according to the first embodiment of the present invention.
FIG. 1B is a schematic diagram showing the detailed power wiring of the first embodiment.

FIG. 2A and FIG. 2B are schematic diagrams showing the configuration of the power detecting module and the second area power converting device.

FIG. 3A and FIG. 3B are schematic diagrams showing an AC charging system for EVs according to the second embodiment of the present invention.

FIG. 4A and FIG. 4B are schematic diagrams showing the power supply structure of the second area power converting device.

FIG. 5, FIG. 6, and FIG. 7 are schematic diagrams showing the configuration of the AC charging system for EVs.

FIG. 8 is a diagram showing the relationship between the total power of the second area power converting device and the control of the total charging power.

FIG. 9A and FIG. 9B are diagrams showing the relationship between time and real-time power, average power, and actual average power in one embodiment according to the present invention.

## DESCRIPTION OF THE PREFERRED EMBODIMENT

In the following description, this invention will be explained with reference to embodiments thereof. However, the description of these embodiments is only for purposes of illustration rather than limitation. Hereinafter, the AC charging system for EVs and its operation method of the preferred embodiment of the present invention will be described with reference to related drawings.

In the embodiment, the terms used are defined as follows, where "couple" or "coupling" includes electrical connection, which can be connected to each other through a substantial mechanism, or connected to each other through wireless transmission, or connected to each other through an intermediary device. In addition, the "charging load" refers to the load that is charged by the AC charging system of the present invention, and the rest of the electric loads are called "non-charging loads". Moreover, the "total charging power" refers to the power consumed for charging using the AC charging system of the present invention, and the rest of the power consumption is referred to as the "total non-charging power". The above-mentioned non-charging loads and total non-charging power are applicable to include but not limited to residential electricity and industrial electricity.

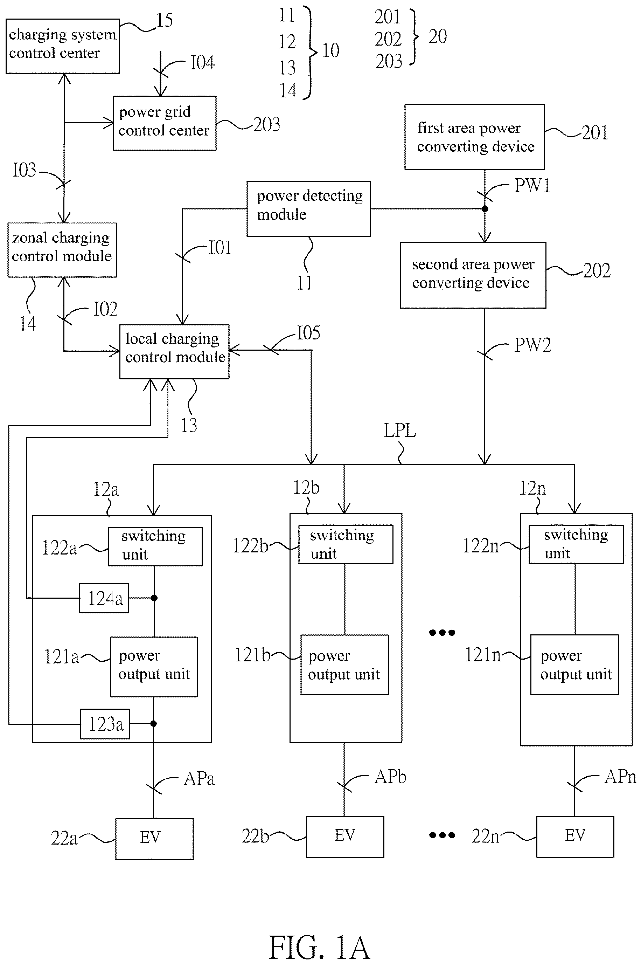

Refer to FIG. 1A, the AC charging system of EVs is cooperated with a power grid 20 and a plurality of EVs 22a-22n. The AC charging system for EVs includes a power detecting module 11, a plurality of local power supplying modules 12a-12n, a local charging control module 13 and a zonal charging control module 14.

First, it should be noted that the power grid 20 includes at least one power supply system, which is a regional power transmission and distribution network, which may include a power generation system, a power transmission system, and a power distribution system. In the embodiment, the power grid 20 has a first area power converting device 201, a second area power converting device 202, and a power grid control center 203.

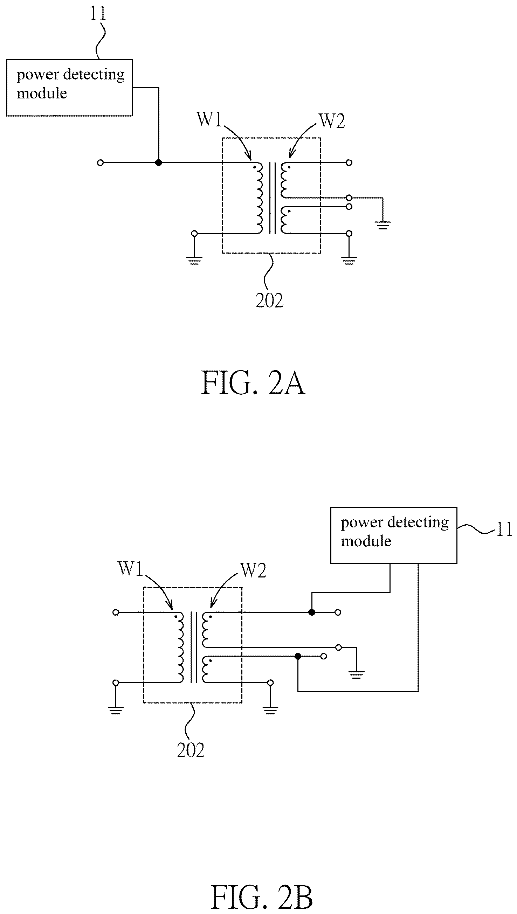

The first area power converting device 201 and the second area power converting device 202 use the transformer as an example, which respectively have a power input side and a power output side. As shown in FIG. 2A and FIG. 2B, the power input side is, for example, the primary winding W1 of the transformer, and the power output side is, for example, the secondary winding W2 of the transformer. The power output side of the first area power converting device 201 is coupled to the power input side of the second area power converting device 202. In this way, the first area power converting device 201 can output the first power PW1 with a voltage level of 22KV to the second area power converting device 202, and the second area power converting device 202 can then perform a coupling to transfer the first power PW1 to the second power PW2 for outputting. The second power PW2 includes but is not limited to voltage levels of 380V, 220V, and 110V. It should be noted that the symbols of PW1 and PW2 mentioned above may also referred to the power wiring respectively in the subsequent description.

The aforementioned voltage level numbers are only examples. Due to the different power conditions of different countries and regions, the voltage level number can be changed to be more suitable for the power conditions of the country or region. In addition, the first area power converting device 201 and the second area power converting device 202 can also be the distribution station or the substation, in addition to the aforementioned aspect of the transformer.

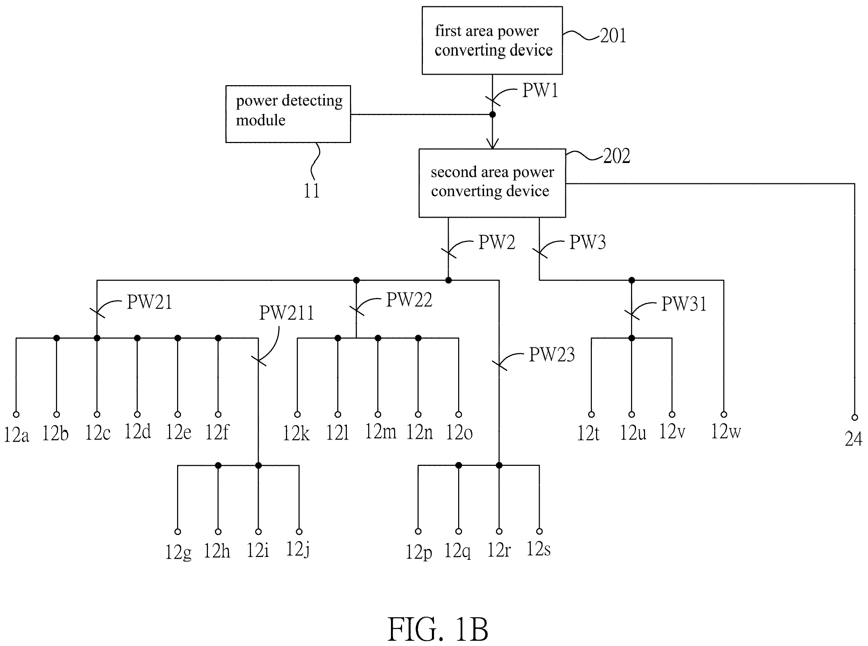

In the existing power wiring, since all the electrical equipment connected to the power wiring are not used at the same time, the capacity of the power wiring is less than the total capacity of all the electrical equipment connected to the power wiring. The relationship between the wiring capacity and the load capacity of the connection is called the wiring-load capacity ratio. Generally, the wiring-load capacity ratio is designed based on experience plus the appropriate design tolerance. Because the present invention can accurately control the usage status of the charging equipment, the AC charging system for EVs can be completed in one construction. However, in the initial stage of construction, the power wiring can use a smaller capacity, and wait for the future increase in the number of the EV and then increase the wiring capacity correspondingly to save the initial construction cost of the system. In other words, the wiring can use a smaller wiring-load capacity ratio to control the load power by the local charging control module to achieve safety and cost savings. Referring to FIG. 1B, the present invention uses one local charging control module to control a plurality of local power supplying modules. When setting up the AC charging system for EVs for a parking lot with multiple parking spaces, setting all the parking spaces with the local power supplying module at one time can save the unit construction cost. The power wiring PW2, PW21, PW211, and PW3 use the wiring with a relatively small capacity and reserve the wiring space to save costs. For example, if one EV is charged at 3KW@220V, the wiring capacity requirements are PW2/57KW@260A, PW21/30KW@136A, PW23/12KW@55A, PW22/15KW@68A, and PW3/12KW@55A, which means the charging load capacity is 69KW@315A. Assuming that the capacity of the second area power converting device 202 is 50KW, in the design planning, it is assumed that 50% of the maximum allowable 50KW is used as the charging load, which represents the allowable capacity of the charging load planned to be 25KW, where 25KW/69KW=36%, which means that when each parking space has the vehicle waiting to be charged, only 36% of the vehicles are allowed to be in the "charging" state, and 64% of the vehicles are in the "waiting for charging" state. So the wiring can do the phased set up with 34% of the load capacity, namely PW2/91A, PW21/48A, PW211/19A, PW22/24A, PW3/19A. Since the wiring power is the sum of the charging power of the local power supplying modules connected to it, the local charging control module 13 can set the upper limit of the load capacity of each wiring, and set the upper limit of the load capacity of each wiring by control the status of EV in "waiting for charging" and "charging" for each wiring. The number of the EV is controlled to achieve the goal of reducing equipment costs and ensuring safety.

In addition, assuming that the parking space of the local power supplying module 12k-12o is easier to full, it can also change the capacity of the wiring PW22 from 24A to 68A and change the settings of the local charging control module 13 to achieve a different the wiring as designed with different the charging capacity ratio. In the present invention, the capacity ratio of the wiring PW22 is significantly different from the capacity ratios of the other wiring. Use the local charging control module to control the load power, and cooperate with the wiring capacity ratio to achieve safety and cost savings.

Among them, when the power of any wiring increases to reach the wiring capacity rising-control value, the local charging control module actively reduces the total charging power of the local power supplying module connected to that wiring. Among them, when the power of any wiring decreases to the wiring capacity falling-control value and there has a charging requirement, the local charging control module actively increases the total charging power of the local power supplying module connected to that wiring. The wiring capacity rising-control value is less than or equal to the upper limit of the wiring capacity, and the wiring capacity falling-control value is less than or equal to the wiring capacity rising-control value.

When the wiring capacity is insufficient due to the newly added the charging requirement, there may be several situations, including the EV that proposed the charging requirement earlier has the higher state of charge (SOC) of the battery capacity, or the EV that proposed the charging requirement later has a higher membership level. Therefore, it is more reasonable to use the vehicle state information as a method to reduce or increase the total charging power of the local power supplying module in the wiring than to use the method that requires the order of charging. In the present invention, because the local charging control module owns the vehicle state information of each the parking space through the service channel, it can compare the vehicle state information of each the EV waiting to be charged, then make a decision to reduce the charging power or increase the charging power of the designated vehicle. For example, it is determined by the membership level in the vehicle state information, the battery capacity, the state of charge of the battery, or the parking plan.

When the number of the EV increases and the charging requirement of the EV cannot be met, the capacity of the second area power converting device 202 or the wiring can be increased, and the setting of the wiring capacity information, the wiring capacity rising-control value or the wiring capacity falling-control value of the local charging control module 13 can be changed simultaneously. Accordingly, the expandability of the system is used to meet the increasing trend of the EV.

As shown in FIG. 1A, the power grid control center 203 generates and outputs a load control information 103 according to an overall load information 104. The overall load information 104 includes the loading state of at least one of the first area power converting device 201 and the second area power converting device 202. Through the power grid control center 203, the normal operation of the power grid 20 can be ensured, and the power dispatch can be used appropriately. It should be noted that the power grid control center 203 can be a single-level control center or a multi-level control center, which is not limited here.

Please refer to FIG. 1A and FIG. 2A together. The power detecting module 11 is electrically connected to the input side of the second area power converting device 202, which is the primary winding W1 of the transformer. The power detecting module 11 is to detect the total load power (or the power parameter) of the first area power converting device 201. Among them, the power (P) is equal to the voltage (V) multiplied by the current (I) (P=VI, where V is the potential difference between the two ends of the component). In general, the power grid 20 is a voltage source, which represents that the voltage is close to a constant value, and means the power is proportional to the current. Therefore, the power parameter can also be obtained by calculating the current parameter.

The design concept of the AC charging system for EVs 10 is to control the total charging power to achieve the goal of protecting the second area power converting device. Therefore, it is necessary to know the power of the second area power converting device 202 and the total charging power. In order to control the total charging power, it is necessary to understand the charging power of the individual power output unit, so as to make accurate judgments when the charging power needs to be changed. The relationship between the total charging power, the total non-charging power and the power of the second area power converting device is:

$$\text{power of the area power converting device} = \text{total charging power} + \text{total non-charging power.}$$

The present invention needs to know any two of the three parameters, that is, the power of the second area power converting device and the total charging power can be obtained through formula calculation. A special example is that the second area power converting device only has the charging load, so it only needs 1 parameter, that is, the power of the second area power converting device can be obtained by the power detecting module alone, or by adding the current value of each of the current detecting units.

The power of the second area power converting device 202 and the total charging power can be obtained by the following three methods.

For the first method, please refer to FIG. 1A, FIG. 2A, FIG. 2B and FIG. 4A. The power of the second area power converting device 202 is obtained by the power detecting module 11, and the total charging power is obtained by adding the current value of the current detecting units of the power output unit by the local charging control module 13.

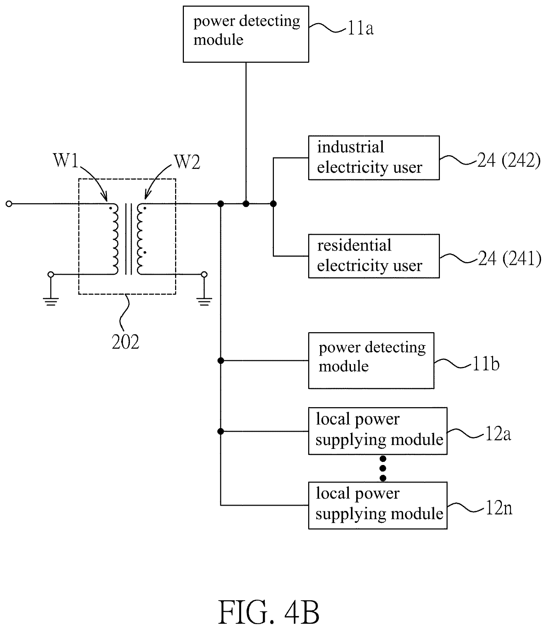

For the second method, please refer to FIG. 4B. The total charging power can be obtained by adding the current value of the current detecting unit of the power output unit by the local charging control module 13. The power of the second area power converting device 202 is obtained by adding the total charging power to the power detecting module 11a, where the power detecting module 11a is detecting the total non-charging power.

For the third method, please refer to FIG. 4B. The total charging power can be obtained by the power detecting module 11b, and the power of the second area power converting device 202 can be obtained by the power detecting module 11a plus the power detecting module 11b. This method requires two power detecting modules, which can save the current detecting unit inside each the local power supplying module, but the disadvantage is that it cannot accurately control and confirm the current of each local power supplying module when controlling the total charging power.

In the power grid 20, since the ratio of the power loss of the area power converting device to the transferred power is very small, the total input power of the area power converting device is almost equal to the total output power of the area power converting device. In addition, as shown in FIG. 2B, the power detecting module 11 can also be disposed on the output side of the second area power converting device 202, which is the secondary winding W2 of the transformer, and it can also detect the total power of the area power converting device. It is to be noted that the output side of the second area power converting device 202 can have a plurality of winding, so the total power of the second area power converting device 202 must be obtained by adding the power of all output sides.

To further explain the connection method of the power detecting module 11, as shown in FIG. 2A, the power detecting module 11 is coupled to the input side winding W1 of the second area power converting device 202 to obtain the input voltage, the total input current, and the total input power of the second area power converting device 202 in the power grid 20. In other words, the power detecting module 11 is detecting the condition of the total input load of the second area power converting device 201. In addition, as shown in FIG. 2B, the power detecting module 11 can also be coupled to the two set of output side winding W2 of the second area power converting device 202 to obtain two set of output voltage, two set of output current, calculate to obtain two set of total output power of the second area power converting device 202 in the power grid 20. In other words, the power detecting module 11 is detecting the condition of the total output load of the second area power converting device 201. In this embodiment, the power detecting module 11 may be a current transformer, a Hall current sensor, or a current sense resistor.

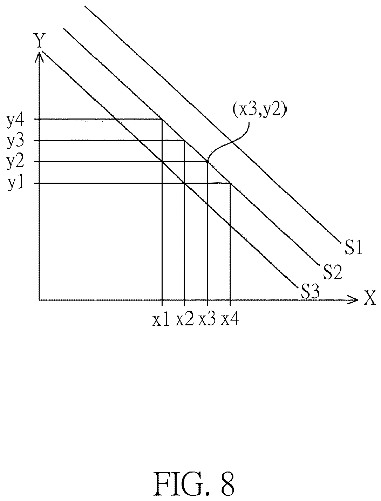

Please refer to FIG. 8, where the X axis is the total non-charging power; the Y axis is the total charging power; examples of x1 to x4 are 20KW, 25KW, 30KW, and 35KW; examples of y1 to y4 are 15KW, 20KW, 25KW and 30KW; S1 is the rated power of the transformer; S2 is the power-rising control value; S3 is the power-falling control value; S1 to S3 are 55KW, 50KW and 40KW respectively. One of the objectives of the present invention is to protect the second area power converting device, where the second area power converting device is generally the transformer, which is marked with the rated power (or the rated capacity) (S1) as protection. Under normal conditions of use, the load cannot exceed the rated capacity, plus the power-rising control value (S2) generated by the appropriate designed tolerance. When the designed tolerance is zero, then S2 is equal to S1. When the power of the area power converting device increases and reaches the power-rising control value, the charging load must be reduced for protection. For example, when the total charging power is 20KW (y2) and the total non-charging power increases to greater than 30KW (x3, that is, x3, y2), the total charging power must be reduced.

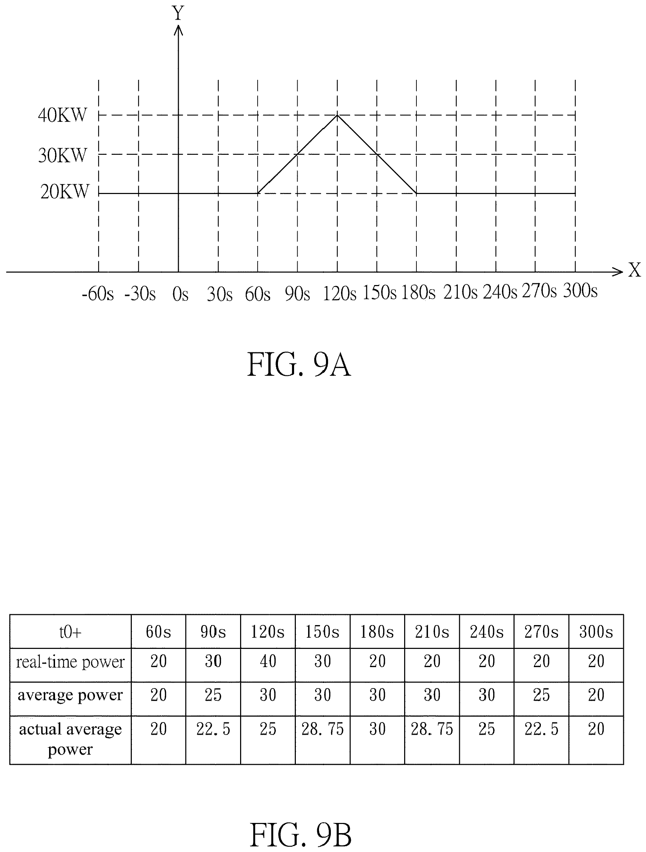

The transformer is composed of the coil and the iron core, which will not be damaged by the instantaneous load overload. In addition, due to the unpredictability of the non-charging load and the unpredictability of the duration, the power can be calculated in different ways using the unit time in addition to the instantaneous power (the measured value). For example, the average power (the average of the maximum value and the minimum value of the measured value in the unit time), the actual average power (the average of the cumulative power based on the time-domain in the unit time) and other calculation methods. FIG. 9A, the time on X-axis is from -60s to +60s, and the corresponding instantaneous power is 20KW; the time on X-axis is from +60s to +120s, and the corresponding instantaneous power is increased from 20KW to 40KW; the time on X-axis is from +120s to +180s, the corresponding instantaneous power is reduced from 40KW to 20KW; the time on X-axis after from +180s, the corresponding instantaneous power is 20KW. Among them, the unit time uses 120 seconds to calculate the power in different ways.

Please refer to FIG. 8, FIG. 9A and FIG. 9B. In FIG. 9A, the X-axis represents time and the Y-axis represents the non-charging instantaneous power. If the power-rising control value (S2) is 50KW, and the time on X-axis is before +60s, the corresponding total charging power is 20KW as an example. FIG. 9B is the total non-charging power, which can be controlled in the following three ways. The first method use the instantaneous power, the charging power must be reduced when the time on X-axis is +90s, and the time on X-axis can be restored to 20KW if necessary after +150; the second method uses the average power, the charging power must be reduced when the time on X-axis is at +120s , and the time on X-axis can be restored to 20KW if necessary after +240; the third method uses the actual average power, the charging power can be maintained at 20KW without any changes. The spirit of the present invention is to obtain the power of the area power converting device and the total charging power. By controlling the total charging power to protect the area power converting device, the power can be calculated in different ways to achieve the best effect.

Please refer to FIG. 1A again, the local power supplying modules 12a, 12b-12n are respectively coupled to the power output side of the second area power converting device 202 through a local power wiring LPL. The local power supplying module 12a, 12b-12n output the controllable power source APa, APb-APn according to the second power PW2 output by the second area power converting device 202. The controllable power source APa, APb-APn are used to perform the charging operation on the battery packs of the EV 22a, 22b-22n, which is coupled to the local power supplying modules 12a, 12b-12n.

The following takes the local power supplying module 12a as an example. The local power supplying module 12a has a power output unit 121a, a switching unit 122a, a connection detecting unit 123a, and a current detecting unit 124a.

The power output unit 121a is, for example, a power outlet, which can be further defined as an AC power outlet, which is used to electrically connect with the EV 22a waiting for charging. The power output unit 121a outputs the controllable power source APa to the EV22a to charge the rechargeable battery (battery pack including a main battery pack or a swappable battery pack) of the EV22. The switching unit 122a is coupled between the power output unit 121a and the power output side of the second area power converting device 202. The switching unit 122a accepts commands from the local charging control module 13 to control the controllable power source APa. The connection detecting unit 123a is coupled to the power output unit 121a, and is used to detect whether an object is electrically connected to the power output unit 121a, and output the detecting result to the local charging control module 13. In the embodiment, the object is, for example, the exterior power connector, which can be the power cable pulled out by the EV. The current detecting unit 124a is coupled between the power output unit 121a and the local power wiring LPL to detect the current of the power output unit 121a to generate and output the charging current information corresponding to the power output unit 121 to the local charging control module 13.

In this embodiment, the switching unit 122a can be composed of a mechanical contact or a semiconductor contact, where the mechanical contact is a relay, and the semiconductor contact is a transistor, a thyristor, or a metal oxide semiconductor field effect transistor. The connection detecting unit 123a can be a mechanical switch, a magnetic switch, or electrical contact through electronic contacts to achieve the purpose of detection. The current detecting unit 124a is similar to the power detecting module 11. It can be a current transformer, a Hall current sensor, or a current sense resistor.

Since the composition and function of the local power supplying module 12b-12n are similar or the same as the local power supplying module 12a, it will not be repeated.

The local charging control module 13 stores a local control information, and is respectively coupled with the power detecting module 11 and the local power supplying modules 12a-12n. The local control information may include, but is not limited to, the capacity information of the second area power converting device or the capacity information of the power wiring. The local charging control module 13 is electrically connected to the local power supplying modules 12a-12n through the local power wiring LPL. In the embodiment, the switching unit and the power output unit corresponding to each group are individually controlled by the local charging control module 13 to output the controllable power source. Therefore, the output power of the controllable power source output by the local power supplying module is different. It is to be noted, a power line communication (PLC) can be used for information transmission between the local charging control module 13 and the local power supplying module 12a-12n. In other words, after the EV is electrically connected to the power output unit, the local charging control module 13 can also obtain the vehicle state information regard to the EV through the PLC. The vehicle state information includes but is not limited to the vehicle identification information, the

EP 3 904 147 A1

member level, the fees-deducted information, the battery capacity, state-of-charge of the battery, the maximum power of the charger, the parking plan or the recharging requirement.

The local charging control module 13 is equipped with a processor to handle the charging-related operations of the EV in the area. The charging-related operations including information interpretation, tariff comparison, cost calculation, charging schedule... etc. Due to the limited amount of information on the charging operation of the EV (even in large parking lots, there are only about hundreds of the EVs), and the computing power of currently processors is powerful, so one local charging control module 13 can be connected to a huge number of the local power supplying module. In one area, if the number of the charging outlet have to increase, it need to increase the local power supplying module only. This also means that the higher the number of the charging outlet, the lower the average unit price.

The zonal charging control module 14 is respectively coupled to the local charging control module 13 and the power grid control center 203. The zonal charging control module 14 receives the load control information 103 transmitted by the power grid control center 203, and transmits a remote-control information 102 to the local charging control module 13. The local charging control module 13 can control the output power of each of the controllable power source APa output from the local power supplying modules 12a-12n according to the power parameter 101, the vehicle state information, the local control information and the remote-control information 102. In short, the power grid control center 203 can indirectly control the output power of the local power supplying modules 12a-12n through the zonal charging control module 14 according to the load control information 103, thereby avoiding the power grid 20 from crashing. In other embodiments, the zonal charging control module 14 and the local charging control module 13 may also be an integrated module.

It should be noted that the remote-control information I02a obtained by the local charging control module through the zonal charging control module 14 includes but is not limited to the terminal stage power supply capacity information, the time of use price information, the vehicle identification information, the member level, or the fees-deducted information. Among them, the terminal stage power supply capacity information and the time of use price information are output by the power grid control center. In addition, the vehicle identification information, the member level, and the fees-deducted information are output by a charging system control center 15. The charging system control center 15 integrates all the AC charging system for EVs data, such as the registration of new members, and transmits the data to each of the AC charging system for EVs. It can be seen from this that the local charging control module 13 and the zonal charging control module 14 are mainly used to maintain the maximum charging rights of the EV user and to maintain the total load of the power grid 20 without overload and collapse.

The AC charging system for EVs 10 of the above-mentioned first embodiment can be applied to an independent parking lot or the parking space in an area. In short, the power wiring and various components in the AC charging system 10 are for the large number of parking spaces. The following describes the operation method of the AC charging system for EVs of a second embodiment in conjunction with the above, which includes procedures P01 to P06. The EV end must be prepared in advance to cooperate with the AC charging system, such as entering the vehicle identification information, the member level, the fees-deducted information, etc., confirming the method of starting signals, and confirming the settings of related hardware.

Procedure P01 is a connection procedure. The connection procedure includes the physical connection of the power cable and the connection of the communication channel. The physical connection is the EV 22a using the power cable connected to the power output unit 121a. One goal of the present invention is that the number of the charging outlet is more than twice the EV. In addition, the existing charging pile has a corded plug, which causes management difficulties. Therefore, a reasonable solution is the corded plug provided by the EV end. A telescopic reel power cable self-provided by the EV (the automatic cable take-up device) is the preferred option. The so-called "telescopic reel power cable" refers to a mechanism by which the power cable can be automatically stored in a specific location.

The signal connection starts after the local charging control module receives the initial signal. The local charging control module starts the setting and operating of the charging operation with the initial signal. The initial signal is sent by the personnel, for example: the personnel connect the power output unit with the power connector and then send it by the connection detecting unit, the personnel send it by the mobile phone, the personnel send it by the human-machine interface, the personnel use the EV with the PLC The charging cable is sent out, and the personnel are sent out via the EV via wireless communication.

Procedure P02 is a service channel establishing procedure. The local charging control module 13 establishes the service channel with the EV 22a through wired transmission or wireless transmission after receiving the initial signal. The setting and operating of the charging operation can be performed automatically by the local charging control module 13 and a Vehicle Control Unit of the EV to achieve the goal of convenience.

In the embodiment, the initial signal is sent out by the connection detecting unit after the power connector is connected to the power output unit. After the EV is parked in the parking space, only the charging power cable connection is needed, and the local charging control module will complete all the charging operation and the billing operation automatically, which is more convenient for users.

The local charging control module and the service channel of the EV can be established through the wired

10

communication or wireless communication. The wired communication is, for example, PLC, and wireless communication is, for example, Wi-Fi, ZigBee, and base station. The local charging control module 13 can communicate with the EV 22a through the service channel. The driver of the EV can also use the service channel via the EV to propose changes to the charging requirement via a mobile app.

Procedure P03 is a parameter integration procedure. The local charging control module 13 uses the service channel to obtain the vehicle state information of the EV 22. First, confirm that the vehicle identification information in the vehicle state information on the EV matches the vehicle identification information in the local charging control module and is valid. Then, it is integrated according to the power parameter 101, the remote-control information 102, the local control information and the vehicle state information. Then, a pre-determined calculation method is used to establish a charging schedule, wherein the charging schedule matches the overall load of the power grid 20 and meets the requirement of the individual EV. Then, according to the charging schedule, the controllable power source APa-APn provided to the EVs 22a-22n is controlled, respectively. The calculation method of the charging schedule mentioned above can be pre-determined by the system, and can be modified remotely by the zonal charging control module after different usage experiences. One of the calculation methods, for example, successively charge the battery of each the EV to 50%, wherein the higher the member level has priority; and then successively charge the battery of each the EV, wherein the higher the member level has priority.

The local charging control module 13 performs operations such as starting charging, stopping charging, increasing charging power, and reducing charging power on the individual EV according to the charging schedule. In the embodiment, since the power parameter 101, the number of vehicles connected to the power output unit increases or decreases, the local control information 105, the vehicle state information or the remote-control information 102 may be updated at any time, the charging schedule will be updated based on information updates. This also means that the EV on the parking space may go through multiple cycles of "waiting for charging/charged/waiting for charging/charged..." before the battery is fully charged or leaves the parking space.

The charging schedule includes the order in which the EVs that have established the service channel to start charging, stop charging, increase charging power, and reduce charging power. Use the charging schedule to control the sum of the total charging power consumption for EV plus the total non-charging power consumption is less than the capacity of the area power converting device, or less than the terminal stage power supply capacity to ensure the safety of the power grid. The real-time total power of the area power converting device is learned from the power detecting module.

Procedure P04 is a charging procedure. When the power parameter I01 output by the power detecting module 11 is judged by the local charging control module 13 and it shows that the power of the first area power converting device 201 has increased and reaches the power-rising control value, the charging schedule will be updated by the local charging control module 13, and the total charging power of the controllable power source APa-APn output from the local power supplying module 12a-12n to the EV 22a-22n will be actively reduced. The total charging power can be reduced by lower the total output power of the local power supplying module 12 until it reach zero. In other words, the output power of the local power supplying module 12 is adjusted within a pre-determined power range and zero. The pre-determined power can be the capacity of the area power converting device, or it can be manually set. To further explain, the local charging control module 13 can adjust the total charging power between the maximum total charging power and the zero power to ensure the safety of the area power converting device and the power grid 20. This means that when the power grid is overload, the local charging control module 13 can actively reduce the total charging power until the output is zero to avoid the power grid overload, thereby ensuring the safety of the power grid. In other words, before the battery pack of each the EV 22a-22n is fully charged, the local charging control module 13 can actively reduce the charging current of each EV 22a-22n or stop charging to achieve the optimal charging efficiency.

When the power parameter I01 output by the power detecting module 11 is judged by the local charging control module 13, and it shows that the power of the second area power converting device 202 has been reduced and reaches the power-falling control value, the control module 13 will update the local charging schedule, and the total charging power of the controllable power source APa-APn output from the local power supplying module 12a-12n to the EV 22a-22n will be actively increased.

The method for the local charging control module to control the charging current (power) of the power output unit is as follows: First, the EV is required to be connected to the power output unit of a designated local power supplying module of a designated parking space. Then, the local charging control module 13 transmits a stage charging current information to the designated EV through the service channel. Then, the designed EV controls the onboard AC to DC power converter to perform the charging operation in accordance with the stage charging current information. Next, the local charging control module 13 obtains the charging current of the designated EV from the current detecting unit of the designated local power supplying module, and determines that the error of the charging current and the stage charging current information of the designed EV is within the allowable range to complete the charging current control procedure. If the error exceeds the allowable range, the local charging control module controls the switching unit to stop the charging operation of the designated EV to ensure that the local charging control module controls the charging current and achieves the purpose of controlling the power of the charging outlet.

The local charging control module controls the designated power output unit in state-by-state, so that the controllable power source APa-APn output by the power output units 121a-121n can be adjusted to the power required by the local charging control module. The second area power converting device 202 is a voltage source, and the current and power of the power output unit 121 have a linear relationship. Therefore, obtaining current information is equivalent to obtaining power information.

The AC charging system for EVs adopts a state-by-state method for the charging operation. The state-by-state method refers to after the service channel is established, the charging status of the EV in the parking space is in two states: "waiting for charging" and "charging". For example, "charging (full charge) / waiting for charging", "waiting for charging / charging (full charge)/ waiting for charging", "waiting for charging / charging / waiting for charging / charging (full charge) / waiting for charging", "charging (full charge) / waiting for charging / charging"... etc.. Among them, "charging" refers to the power output unit charging the connected EV, and " waiting for charging " refers to the power output unit actively not charging the connected EV. In short, the EV that is charged through the AC charging system of the present invention may not be continuously charged during the EV is connected to the system. The EVs are under the control of the system and change their states between "waiting for charging" and "charging".

Among them, "charging (full charge)/ waiting for charging/charging" is an example of a special recharging requirement. The reason is that fuel vehicles need to start the engine to start the air condition system. If the engine is started remotely, exhaust gas will be generated, so it is dangerous and not used. However, the air condition system of the EV is directly driven by the battery pack, so the EV can remotely start the air condition system before driving, and enter the charging mode synchronously when starting the air condition system, which can reduce the power consumption of battery capacity. Under such an embodiment, it may happen that the battery is fully charged and then recharged. This is one of many new applications of the present invention.

In the embodiment, the charging schedule adopts the charging method in state-by-state, which means that the total capacity of the power output units 121a-121n of one AC charging system can be greater than the capacity of the second area power converting device 202, but not cause overload. In addition, the AC charging system adopts the charging method in state-by-state, which means that the wiring capacity in the system can be less than the total capacity of the connected power output units 121a-121n. Therefore, the average unit price and construction cost of the charging outlet can be further reduced.

When the local charging control module 13 reduces the total charging power of the EV to a zero-power state, the AC charging system for EVs with a load equal to zero is like an electrical appliance that turns off the power, and it will not consume power when connected to any socket. This means that the AC charging system for EVs with zero power can be directly added to the existing power grid for operation. At the same time, it can ensure the safety of the area power converting device and prevent the power grid from crashing. Therefore, such a charging system can efficiently use the excess power of the power grid to charge the EVs.

The charging current of the power output unit can be turn on (maximum power) or turn off (zero power), or any value between zero power and maximum power.

Procedure P05 is a disconnect procedure. When the driver of the EV decides to end the charging, the disconnection procedure can be executed, which includes physical disconnection and signal disconnection. The physical disconnection is the disconnection of the power cable of the EV 22a and the power output unit 121a. The signal disconnection is to send the disconnection signal by the personnel, for example: the disconnection signal is sent by the connection detecting unit after the personnel unplug the power connection cable from the power output unit, the disconnection signal is sent from a mobile phone by the personnel, the disconnection signal is sent from the human-machine interface by the personnel, the disconnection signal is sent from the EV through the wireless transmission or the wired transmission by the personnel, or the disconnection signal is sent by person drives the EV away from the parking space, causing the service channel to be disconnected.

Procedure P06 is a billing operation. The local charging control module performs the billing operation after finishing charging. The billing operation refers to calculating the charging power, the charging period, and the time-of-use rate of the EV to obtain cost information, wherein the time-of-use rate may not change. Fees are collected in a variety of ways, such as payment by personnel through the human-machine interface coupled with the local charging control module, or payment by personnel using mobile phones, or transmission of cost information to the zonal charging control module and pay by a designated account.

As mentioned above, with the low construction cost and the low average unit price of the charging outlet, it is possible to achieve that every parking space has charging outlet. The problems of fuel vehicles occupying the rechargeable parking space and the EV occupying the parking space after charging will automatically disappear. The parking lot manager can not only facilitate the management, but also increase the income of the charging fee. In addition, each the parking space has one charging outlet to settle the charging fee before the vehicle moves out of the parking space. Users only need to connect the charging cable and disconnect the charging cable, and the local charging control module can automatically handle the charging operation to achieve the goal of convenient operation and use by users.

The existing charging method of the charging pile is to first pay the charging fee and then perform the charging operation, and the charging operation will end until the charging capacity purchased by the charging fee arrives. One goal of the present invention is to solve the problem of insufficient number of the charging outlets, but even if the parking space of the parking lot is fully equipped with the charging outlets, it is not possible to charge too many the EVs at the same time. The reason is that the undercapacity of the existing area power converting device may cause safety problems, or the generating capacity is undercapacity and the distribution capacity is undercapacity at peak times. It takes a relatively long time to increase the generating capacity and the distribution capacity. The solution is to solve the problem of insufficient capacity by charging in state-by-state. The EV, which is connected to the power output unit is charged in state-by-state that is a feature of the technology of the present invention. Because the charging takes turns, the charging fee must be calculated after the charging is stopped. Therefore, charging fee calculated according to the charging capacity after the charging process is completed is another technical feature of invention. Therefore, after the establishment of the service channel and before performing the charging action, it must be confirmed that the local charging control module and the vehicle state information of the connected vehicle are consistent and effective in order to avoid the inability to charge the fee.

The main technical features of the AC charging system for EVs are as follows, using the power detecting module to obtain the power (or the current) of the second area power converting device of the power grid. Control the charging load to ensure the safety of the second area power converting device. The control method controls the charging power of the individual local power supplying module in a "state-by-state" manner. Each the local power supplying module is equipped with the current detecting unit and the switching unit to achieve the goal of controlling the charging load power of each the power output unit, and then controlling the total charging power.

The goals of the AC charging system for EVs and its operation method and the problems to be solved are described below. 1. Use the charging outlet (one charging control module and multiple power supplying modules) with low unit price to solve the problem of insufficient quantity of the charging outlet. 2. Use the power detecting module to obtain the power of the second area power converting device to solve the safety problem of the power grid. 3. Use alternate charging and actively increase or decrease the total charging power to solve the capacity problem of the power grid. 4. use the power (the power output unit and the current detecting unit) of each outlet to solve the charging power control problem. 5. Use cost calculation before disconnecting the charging cable to solve the charging problem.

General-purpose passenger vehicles are usually located around the home when off work and the office when on duty. The home parking space refers to the home garage or the parking space near the home. Providing each the EV with the charging outlet with the home parking space is a necessary condition for the success of the EV industry. The AC charging system for EVs is also suitable for charging in the parking space of the home. Provides operating methods for home charging, arranging for the EV of the home waiting for charging in state-by-state, to avoid the area power converting device or the power grid from crashing to ensure charging safety, and at the same time, EV owner can get discounts on electricity prices. The power supply configuration in the residential area is generally that one area power converting device supplies multiple homes, and the existing wiring between the area power converting device and the home can be fully utilized to reduce the construction cost of the AC charging system for EVs. The following is a third embodiment to illustrate an exclusive application implementation of the AC charging system for EVs of the present invention applied to a home.

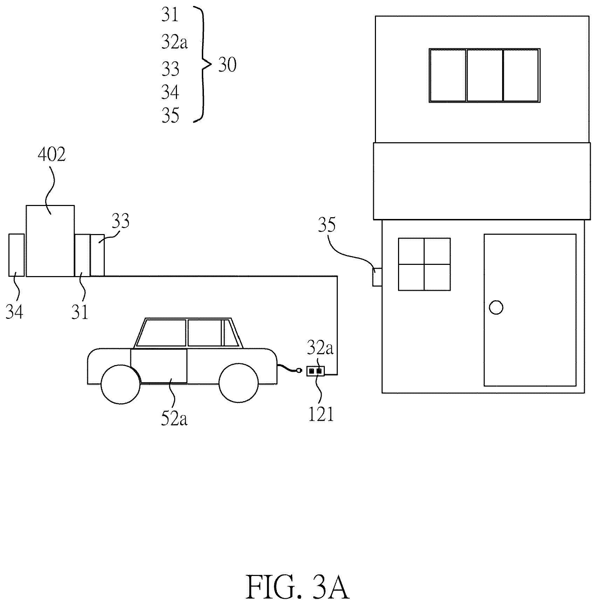

Please refer to FIG. 3A, the AC charging system for EVs 30 is similar to the AC charging system for EVs 10 of the first embodiment, which includes a power detecting module 31, a local power supplying module 32a, a local charging control module 33, and a zonal charging control module 34. Use the original home wiring PW3 of the home and connect the wiring to the local power supplying module before the home electricity-billing device 35 (the so-called Electronic meter), which has been described in the previous embodiment and will not be repeated here.

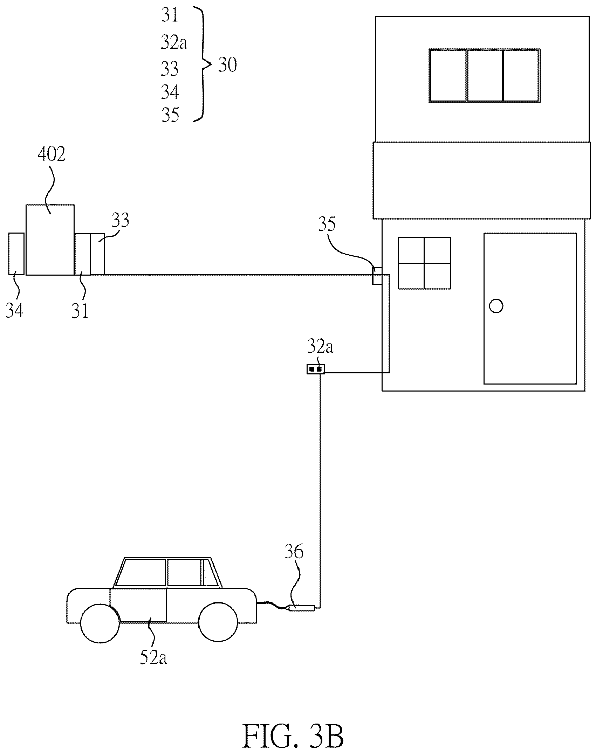

Please refer to FIG. 3B again. In the embodiment, the power detecting module 31 and the local charging control module 33 can be disposed near to the area power converting device 402 near the home. Among them, the area power converting device 402 can be the same as the second area power converting device 202 described in the first embodiment. The local power supplying module 32a can use the original home wiring PW3 and install it behind the home electronic meter. Its location can be in the home, garage, the fixed parking space next to the home or nearby the parking space where possible to park. The AC charging system for EVs 30 uses the original home power wiring between the area power converting device 402 and the home to operate. The so-called home power wiring is, for example, from the area power converting device 402 to the home electronic meter, and the internal power wiring after the home electronic meter. Among them, the local power supplying module 32a can be electrically connected to the area power. converting device 402.

The local power supplying module 32a accepts the command from the local charging control module 33 before connecting the power output unit 121 to the power grid, and stores the home-vehicle identifying information in the local charging control module. The local charging control module 33 only charges the home vehicle, and can turn the charging outlet of the parking space into the home exclusive use. The home-vehicle identifying information can be updated at any time via the zonal charging control module 34.

To extend the use of the aforementioned features, if the home parking space is near the home but not fixed, it can also use an extended power cord 36 to connect to the power output unit 121 of the local power supplying module 32a to charge the EV. The local charging control module 33 can use the aforementioned methods such as the connection detecting unit 123a, the current detecting unit 124a, and the service channel to ensure charging safety.

Homes can install the intelligent meters. In this way, electricity bill calculations can enjoy the time of use price discount, but the calculation of electricity bills still adopts a cumulative calculation method. In the present invention, the charging period is controlled by the local charging control module 33. In addition to not having to install the intelligent meters, it can enjoy the time of use price discount, and the total charge quantity can be calculated separately to avoid the cumulative cost has increased.

The AC charging system for EVs 30 of the present invention can share the original home power wiring, and the local power supplying module is installed after the home electricity-billing device 35. That is, the home electricity-billing device 35 is located between the local power supplying module 32a and the area power converting device 402. The local charging control module 33 obtains the charging power of the EV by the current detecting unit of the local power supplying module 32a. The local charging control module 33 calculates the charging power, the charging period, and the time-of-use rate to obtain the total charge quantity of the home and the charging fee of the home. The charging fee information of the residence is transmitted to the zonal charging control module 34 and paid by the designated account. In this way, the EV can be charged at home to enjoy the time of use price discount which provide incentives for the AC charging system to install in home, jointly avoid the collapse of the power network and improve the efficiency of the power grid.

The total charge quantity of the home can be obtained as described above, the total electric quantity of the home can be obtained from the home electricity-billing device, and the total non-charge quantity of the home can be obtained by calculation. The cost can be calculated separately to avoid the cost increase caused by the cumulative system. The calculation formula is as follows:

total non-charge quantity of the home = total electric quantity of the home - total charge quantity of the home; wherein each of the total electric quantity is obtained from the same time period.

When the zonal charging control module 34 processes with the charging fee of the EV, the total charge quantity of the home can be calculated separately, and the total charge quantity of the home can be sent to the power grid control center at the same time. The power grid control center deducts the total charge quantity of the home from the total electric quantity of the home to obtain the total non-charge quantity of the home, and then calculates the total non-charge quantity of the home accordingly. Reaching the total electric quantity of the home will not increase due to the cumulative calculation of the EV charging.

The above operation methods can enjoy the benefits of the time of use price, avoid cumulative calculation, use the original wiring to reduce construction costs, and the local power supplying module is easy to construct. The charging outlet of the home parking space of the AC charging system for EVs achieves the beneficial effects of reducing the EV charging fee and increasing the off-peak power usage rate of the power grid.

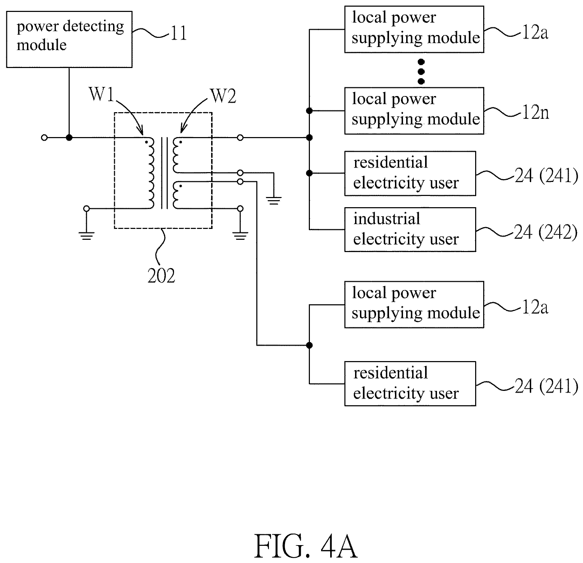

Please refer to FIG. 4A again. The secondary winding W2 of the second area power converting device 202 is coupled to the charging load of the local power supplying module 12 and also coupled to the non-charging load of a third party power user 24. The so-called "third party power user" 24 is, for example, the residential electricity user 241 or the industrial electricity user 242, which are not controlled by the AC charging system 10 of the present invention. Here is an example of the transformer, whose architecture can be extended to, for example, the zonal power grid of an entire city or even a country.

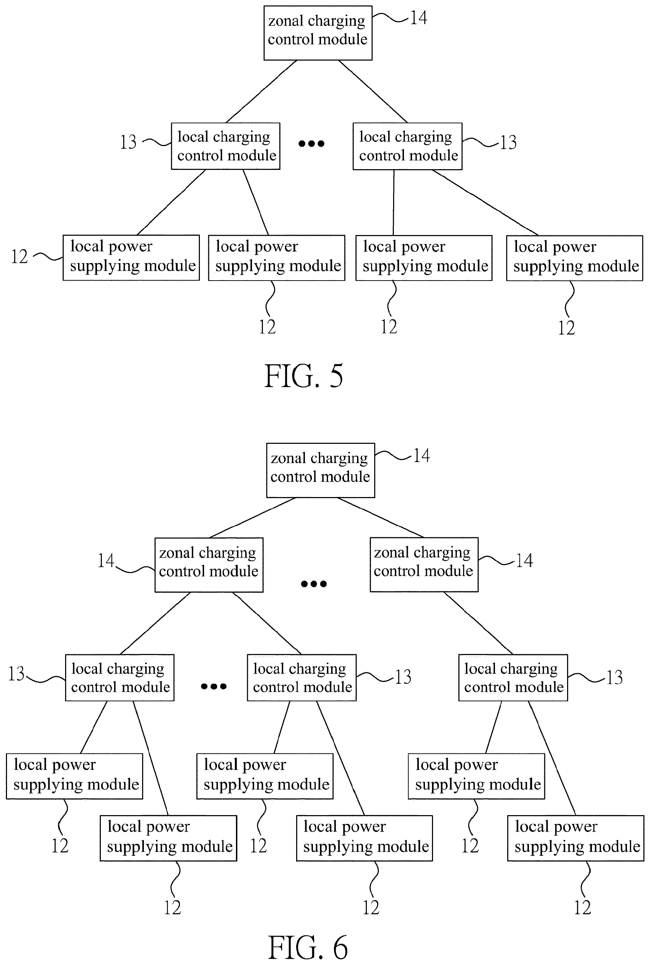

Please refer to FIG. 5 again, which shows that in the AC charging system for EVs, one zonal charging control module 14 can be coupled to multiple local charging control modules 13, and each local charging control module 13 can also be coupled to multiple local power supplying modules 12 as the district control.

As shown in FIG. 6, multiple zonal charging control modules 14 can be coupled to each other to form one AC charging system. With the construction of the AC charging system for EVs, the load of the power grid can be effectively scheduled (the load dispatch), especially when a large number of the EVs are in the charging operation at the same time.

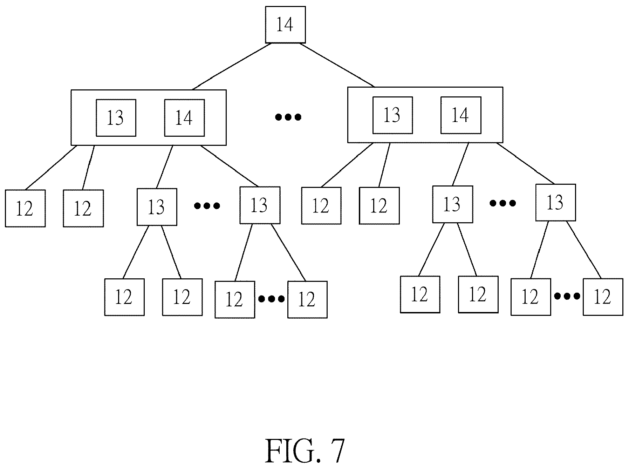

Please refer to FIG. 7 again. In other embodiment, the zonal charging control module 14 and one local charging control module can become an integrated module. The other local charging control modules can communicate with the integrated module via wired or wireless means. The zonal charging control module in the integrated module is then connected to the other zonal charging control modules via wired or wireless means.

In summary, according to the AC charging system for EVs of the present invention, the power grid control center controls the charging power of the area power converting device of each terminal through the zonal charging control module, thereby deploying the loading state of the power grid. The management method is that the each local charging control module uses the power detecting module to obtain the power of the area power converting device; the each local charging control module delivers the power and the total charging power information of the area power converting device to the power grid control center through the zonal charging control module; the power grid control center is then distributed according to the information obtained and the electricity supplied of the power grid; and the stage power supply capacity information of the power grid is transmitted to the zonal charging control module; the zonal charging control module distributes the terminal stage power supply capacity information to each corresponding local charging control module; the local charging control module controls the total charging power according to the information obtained. With the system and the management method, the power grid control center can deploy all the charging loads. The electric quantity and the charging quantity of the EV, which has a large demand for electricity, can be regulated during peak and off-peak periods of electricity consumption to avoid the collapse of the power grid and generate maximum economic benefits.

To further explain, the AC charging system for EVs of the present invention has the following functions: First, the power supplying side uses the AC charging system for EVs built in various places to obtain all the charging load and related information about the non-charging load, and also to obtain all the charging load management and control capabilities through the AC charging system for EVs, so that the electricity terminal can make full use of the power generation capabilities and the power distribution capabilities of the power grid, which can improve energy efficiency; Second, the local charging control module uses the power detecting module to obtain the power of the second area power converting device, and uses the current detecting unit of the local power supplying module to obtain the total charging power, and uses method of charging in state-by-state and actively to stop charging to ensure the area power converting device is safe to use; Thirdly, with the low construction cost of the electricity terminal and the charging outlet with low unit price, each parking space can be equipped with the charging outlet, and then charging method of the charging in state-by-state can be adopted; Fourth, through the automated charging settings, users can achieve easy operation and the goal of convenient management by the parking lot manager. Fifth, the EV can be charged by actively stop to charging or actively start to charge during the charging process in accordance with the power requirement of the power grid to flexibly allocate power.

In summary, the solutions to the problems arising from the popularization of the EV are as follows. The derivative problems include the terminal transformer undercapacity, peak and off-peak power consumption of the power grid, and insufficient quantity of the charging outlet.

1. The solution to the undercapacity problem of the terminal transformer (the second area power converting device) is to directly monitor the output power of the area power converting device through the AC charging system for EVs, and actively reduce (or cut off) the total charging power of the EV. The situation where the total charging power drops to the zero power is like the AC charging system for EVs is not equipped, which means that the AC charging system can be directly coupled to any terminal transformer without causing any overload of the terminal transformer and causing safety problems.

2. The solution to the peak power consumption and the off-peak power consumption problem of the power grid is based on the AC charging system for EVs and the power grid information. When the power grid uses peak electricity with insufficient capacity, it will actively reduce (or cut off) the EV charging load : state-by-state operation. No matter how many the EV is connected to the charging outlet, the power grid will not collapse. In addition, the AC charging system for EVs cooperates with the power grid information to actively increase the EV charging load during off-peak power consumption to increase the efficiency of the power generation and the power grid.

3. The solution to the insufficient quantity problem of the charging outlet is to use the charging outlet with low unit cost design (including the control of multiple outlets by one local charging control module and redesign the charging cable moving to the EV end... etc.), using the existing (original) power wiring to reduce construction costs and simplify the charging steps and related facilities.

The features of the present invention compared with the existing application technology are as follows: 1. The active charging outlet is to actively reduce or increase the charging load by cooperating with the non-charging load power, the capacity of the second area power converting device, and the capacity of the power grid (any endpoint of the existing power grid can use this method) to coordinate the system with the power grid. Compared with the existing the charging pile, which is operated separately, the AC charging system can cooperate with the power grid to increase the safety and efficiency of the power grid. 2. The charging cable is pulled out from the EV end and connected to the charging outlet, and using the charging operation with charging in state-by-state. The charging operation with charging in state-by-state means that there is a "charging" state at least before and after the "waiting for charging" state, which means that the "charging" is actively stopped and then the "charging" action is performed again. 3. The fee is settled after the charging operation finished, and the charging pile must be paid before charging. Therefore, AC charging system for EVs of the present invention has the advantage of flexible application. 4. Use the control center that operates according to external conditions to control multiple sockets. The master-slave design has a lower cost and a more user-friendly than the existing charging pile that operates separately.

The above embodiments merely give the detailed technical contents of the present invention and inventive features thereof, and are not to limit the covered range of the present invention. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

**Claims**

1. An AC charging system for EVs (10) cooperates with a power grid (20), the power grid (20), which has a first area power converting device (201) and a second area power converting device (202) coupled to each other, a power of first area power converting device (201) is greater than a power of the second area power converting device (202), comprising:

a power detecting module (31), which is coupled to the second area power converting device (202) to generate a power parameter (101);
a plurality of local power supplying module (12), which is coupled to a power output side of the second area power converting device (202) via a local power wiring (LPL), and each local power supplying module (12) comprising:

a power output unit (121), which outputs a controllable power source (APa);
a switching unit (122), which is coupled between the corresponding power output unit (121) and the local power wiring (LPL); and
a current detecting unit (124a), which detects a current of the power output unit (121); and

a local charging control module (13), which is coupled to the power detecting module (11), and respectively controlling the controllable power sources (APa) provided by the local power supplying module (12) according to the power of the second area power converting device (202);
wherein, a plurality of electric vehicles (22) are connected to the corresponding power output unit (121) of the local power supplying module (12) through a power cable, respectively,
wherein the local charging control module (13) controls the power output unit (121) to output the controllable power source (APa) to the corresponding electric vehicle (22) to perform a charging operation.

2. The AC charging system for EVs of claim 1, wherein the local charging control module (13) actively decreases a total charging power of the local power supplying module (12) when the power of the second area power converting device (202) increased and reached a power-rising control value; and
wherein the local charging control module (13) actively increases the total charging power of the local power supplying module (12) when the power of the second area power converting device (202) decreased and reached a power-falling control value and have a charging requirement.

3. The AC charging system for EVs of claim 1, wherein the power detecting module (11) is coupled with a power input side of the second area power converting device (202) to generate the power parameter (I01), which corresponding to the power of the second area power converting device (202).

4. The AC charging system for EVs of claim 1, further comprising:
a power grid control center (203), which controls the total charging power of the local charging control module (13) through a zonal charging control module (14) to regulate the power of the second area power converting device (202).

5. The AC charging system for EVs of claim 1, wherein the local power supplying module (12) further includes a connection detecting unit (123a), which detects whether the power output unit (121) is connected to an exterior power connector and does not provide the controllable power source (APa) when the power output unit (121) is not connected to the exterior power connector.

6. The AC charging system for EVs of claim 1, wherein the local charging control module (13) obtains a remote-control information (102) through a zonal charging control module (14).

7. The AC charging system for EVs of claim 1, wherein the local charging control module (13) controls each of the local power supplying modules (12) to perform the charging operation on the EVs (22) in state-by-state, where the alternate charging method is that when each EV (22) is electrically connected to the corresponding power output unit (121), the state arrangement of the power output unit (121) is a combination of "waiting for charging" and "charging" or "increased for charging current" and "decreased for charging current".

8. The AC charging system for EVs of claim 7, wherein a method of controlling the output of the controllable power source (APa) of each the power output unit (121), comprising:

the local charging control module (13) designates the transmission of a stage charging current information to one of the EVs (22);

the designated EV (22) controls a car onboard AC to DC power converter to charge the EV (22) according to the stage charging current information;

obtaining a charging current information of the designated EV (22) from the current detecting unit (124a) of the designated local power supplying module (12) by the local charging control module (13); and

checking that an error of the charging current information and the stage charging current information of the designed EV (22) is within the pre-determined allowable range,

wherein the local charging control module (13) terminates the charging current of designated EV (22) by the switching unit (122) if the error is out of pre-determined allowable range.

9. The AC charging system for EVs of claim 7, wherein before performing with the charging operation, the AC charging system (10) further comprises confirming that the EVs (22) are consistent and valid with a vehicle state information of the local charging control module (13).

10. The AC charging system for EVs of claim 1, wherein when the charging operation is finished, further comprises performing a billing operation.

11. The AC charging system for EVs of claim 1, wherein when the power of any local power wiring (LPL) increases to a wiring-capacity-rising control value, the local charging control module (13) actively reduces the total charging power of the local power supplying modules (12) connected to the wiring; and

wherein when the power of any local power wiring (LPL) decreases to a wiring-capacity-falling control value and there has a charging requirement, the local charging control module (13) actively increases the total charging power of the local power supplying modules (12) connected to the wiring.

12. The AC charging system for EVs of claim 11, wherein the wiring-capacity-rising control value is less than or equal to the upper limit of the wiring capacity, or the wiring-capacity-falling control value is less than or equal to the wiring-capacity-rising control value.

13. An AC charging system for EVs, which is used in conjunction with a power grid (20) and a home, the power grid (20) has a first area power converting device (201) and a second area power converting device (202) coupled to each other, the power of the first area power converting device (201) is greater than the power of the second area power converting device (202), comprising:

a power detecting module (31), which is coupled with the second area power converting device (202) to generate a power parameter (101);

at least one local power supplying module (32a), which is coupled to a power output side of the second area power converting device (202) through a local power wiring (LPL), comprising:

a power output unit (121), which outputs a controllable power source (APa) to charge the EV (22);

a switching unit (122), which is respectively coupled between the corresponding power output unit (121) and the local power wiring (LPL); and

a current detecting unit (124a), which detects a current information of the power output unit (121);

a local charging control module (33), which is coupled to the power detecting module (31), and respectively controlling the controllable power source (APa) provided by the local power supplying module (32a) according to the power of the second area power converting device (202), and calculates a total electric quantity of home-charging based on the current information detected by the current detecting unit (124a); and

a home electricity-billing device (35), which is disposed between the local power supplying module (32a) of the home and the second area power converting device (202) to detect a total electric quantity of home-load of the home, wherein the cost calculation of the total electric quantity of home-load of the home is divided into two parts to calculate the cost separately, one is the total electric quantity of home-charging, and the other is a total electric quantity of home-non-charging, wherein the calculation formula of the total electric quantity of home-non-charging is:

total non-charge quantity of the home = total electric quantity of the home - total charge quantity of the home.

14. The AC charging system for EVs of claim 13, wherein the local charging control module (33) stores a home-vehicle identifying information, and the charging operation is started after judging that the EV (22) connected to the power output unit (121) meets the home-vehicle identifying information.

15. The AC charging system for EVs of claim 13, wherein the power wiring between the second area power converting device (202) and the home electricity-billing device (35) uses the original existing power wiring.

FIG. 1A

FIG. 1B

11

power detecting
module

W1    W2

202

FIG. 2A

power detecting
module    11

W1    W2

202

FIG. 2B

FIG. 3A

31
32a
33    } 30
34
35

402

33

35

34    31

32a

36

52a

FIG. 3B

power detecting
module ⌐11

W1      W2

202

local power
supplying module ⌐12a

⋮

local power
supplying module ⌐12n

residential
electricity user ⌐24 (241)

industrial
electricity user ⌐24 (242)

local power
supplying module ⌐12a

residential
electricity user ⌐24 (241)

FIG. 4A

power detecting module ~11a

W1    W2

industrial electricity user ~24 (242)

residential electricity user ~24 (241)

202

power detecting module ~11b

local power supplying module ~12a

local power supplying module ~12n

FIG. 4B

zonal charging
control module ⌐∿14

local charging
control module

local charging
control module

local power
supplying module

local power
supplying module

local power
supplying module

local power
supplying module

## FIG. 5

zonal charging
control module ⌐∿14

zonal charging
control module

zonal charging
control module

local charging
control module

local charging
control module

local charging
control module

local power
supplying module

local power
supplying module

local power
supplying module

local power
supplying module

local power
supplying module

local power
supplying module

local power
supplying module

## FIG. 6

FIG. 7

FIG. 8

FIG. 9A

| t0+ | 60s | 90s | 120s | 150s | 180s | 210s | 240s | 270s | 300s |
|---|---|---|---|---|---|---|---|---|---|
| real-time power | 20 | 30 | 40 | 30 | 20 | 20 | 20 | 20 | 20 |
| average power | 20 | 25 | 30 | 30 | 30 | 30 | 30 | 25 | 20 |
| actual average power | 20 | 22. 5 | 25 | 28. 75 | 30 | 28. 75 | 25 | 22. 5 | 20 |

FIG. 9B

Europäisches
Patentamt

European
Patent Office

Office européen
des brevets

# EUROPEAN SEARCH REPORT

Application Number

EP 21 17 0049

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2012/118184 A1 (NEC CORP [JP]; NYU TAKAYUKI [JP]) 7 September 2012 (2012-09-07) * abstract * * figure 1 * * paragraphs [0015] - [0020] * * paragraphs [0021] - [0024] * ----- | 1-15 | INV. B60L53/10 |
| Y | US 2019/135116 A1 (NARLA SANDEEP [US]) 9 May 2019 (2019-05-09) * abstract * * paragraphs [0032], [0038] - [0040] * ----- | 1-15 | |
| A | EP 2 892 138 A1 (HYUNDAI MOTOR CO LTD [KR]) 8 July 2015 (2015-07-08) * abstract * * figures 1-2 * ----- | 1-15 | |
| A | US 2011/038189 A1 (WHITTAM SIMON P [CA] ET AL) 17 February 2011 (2011-02-17) * abstract * * figures 1-2 * * paragraphs [0034], [0036] * ----- | 1-15 | TECHNICAL FIELDS SEARCHED (IPC) B60L |

The present search report has been drawn up for all claims

| Place of search | Date of completion of the search | Examiner |
|---|---|---|
| The Hague | 24 September 2021 | Tzortzopoulos, O |

EPO FORM 1503 03.82 (P04C01)

## ANNEX TO THE EUROPEAN SEARCH REPORT
## ON EUROPEAN PATENT APPLICATION NO.

EP 21 17 0049

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2021

| Patent document cited in search report | | Publication date | Patent family member(s) | | Publication date |
|---|---|---|---|---|---|
| WO 2012118184 | A1 | 07-09-2012 | EP | 2683048 A1 | 08-01-2014 |
| | | | JP | 6011810 B2 | 19-10-2016 |
| | | | JP | WO2012118184 A1 | 07-07-2014 |
| | | | US | 2014015319 A1 | 16-01-2014 |
| | | | US | 2016250942 A1 | 01-09-2016 |
| | | | WO | 2012118184 A1 | 07-09-2012 |
| US 2019135116 | A1 | 09-05-2019 | EP | 3494623 A1 | 12-06-2019 |
| | | | US | 2018037121 A1 | 08-02-2018 |
| | | | US | 2019135116 A1 | 09-05-2019 |
| | | | WO | 2018026495 A1 | 08-02-2018 |
| EP 2892138 | A1 | 08-07-2015 | CN | 104734316 A | 24-06-2015 |
| | | | EP | 2892138 A1 | 08-07-2015 |
| | | | JP | 6431276 B2 | 28-11-2018 |
| | | | JP | 2015119616 A | 25-06-2015 |
| | | | KR | 20150071820 A | 29-06-2015 |
| | | | US | 2015171740 A1 | 18-06-2015 |
| US 2011038189 | A1 | 17-02-2011 | NONE | | |

EPO FORM P0459

For more details about this annex : see Official Journal of the European Patent Office, No. 12/82